# EUROPEAN PATENT APPLICATION

(11) **EP 2 390 637 A1**
(43) Date of publication of application: **30.11.2011**
(21) Application number: 10733563.0
(22) Date of filing: 22.01.2010
(51) Int. Cl.: G01J 3/443

(54) **STANDARD SPECTRORADIOMETER**

(30) Priority: 22.01.2009 JP 2009011478
(71) Applicant: National Institute of Advanced Industrial Science and Technology, Tokyo 100-8921 (JP); Opto Research Corporation, Tokyo166-0002 (JP); OK Lab. Co.,Ltd., Mitaka-shi, Tokyo 181-0013 (JP); Nisshinbo Holdings, Inc., Chuo-ku Tokyo 103-8650 (JP); Yamashita Denso Corporation, Hachioji-shi, Tokyo 192-0913 (JP)
(72) Inventor: IGARI, Sanekazu, Tsukuba-shi Ibaraki 305-8568 (JP); KIKUCHI, Katsuhiko, Tokyo 166-0002 (JP); OHKI, Kohichi, Mitaka-shi Tokyo 181-0013 (JP); SHIMOTOMAI, Mitsuhiro, Okazaki-shi Aichi 444-8560 (JP); TAKEDA, Shunsuke, Hachioji-shi Tokyo 192-0152 (JP)
(74) Representative: Fenlon, Christine Lesley
(86) International application number: PCT/JP2010/050814
(87) International publication number: WO 2010/084956

(57) **Abstract**

Provided is a standard spectroradiometer which accurately measures the spectral radiation characteristic of a solar simulator and has a function of diagnosing a light source lamp and a lighting circuit thereof. The standard spectroradiometer including first light detection means (91) to (95) for respectively detecting spectral lights obtained by dispersion, the spectral lights being made by splitting and conducting a flashlight emitted from a pulse-lighting type solar simulator (2) by a plurality of optical fibers (71) to (75) and dispersing the conducted flashlights by respective spectroscopes (81) to (85), includes: a second light detection means (10) for detecting the flashlight emitted from the solar simulator (2); a threshold determination circuit (13) comparing a detection voltage detected by the second light detection means (10) and a threshold reference voltage and outputting a determination signal when the detection voltage becomes equal to or higher than the threshold reference voltage; and a delay time generation circuit (14) receiving input of the determination signal and outputting a measurement start signal, wherein each of the first light detection means (91) to (95) starts detection upon receiving input of the measurement start signal.

## Description

### TECHNICAL FIELD

The present invention relates to a standard spectroradiometer and, particularly to, a standard spectroradiometer for measuring spectral radiation characteristics of flashlights emitted from various flash lamps for a pulse-lighting type solar simulator, for a camera, for medical use, for printing, for ultraviolet curing and the like.

### BACKGROUND ART

Recently, practical use of a large-scale power generation by solar cells is attracting attention as countermeasures against global warming, and it is inevitable, for development of more efficient solar cells, to accurately measure the performance of the solar cells by a solar simulator simulating sunlight. To this end, it is necessary to accurately grasp in advance characteristics of the solar simulator, one of which is the spectral radiation characteristic of a light source lamp used in the solar simulator. Generally, the spectrum of the solar simulator simulates that of the reference sunlight, and a spectral range in question is within a waveband of 0.25 µm to 2.5 µm to which the solar cell has spectral responsibility.

Incidentally, as the solar simulator used for measuring a solar cell, a pulse-lighting type solar simulator usable on a solar cell manufacturing line is becoming the mainstream at present.

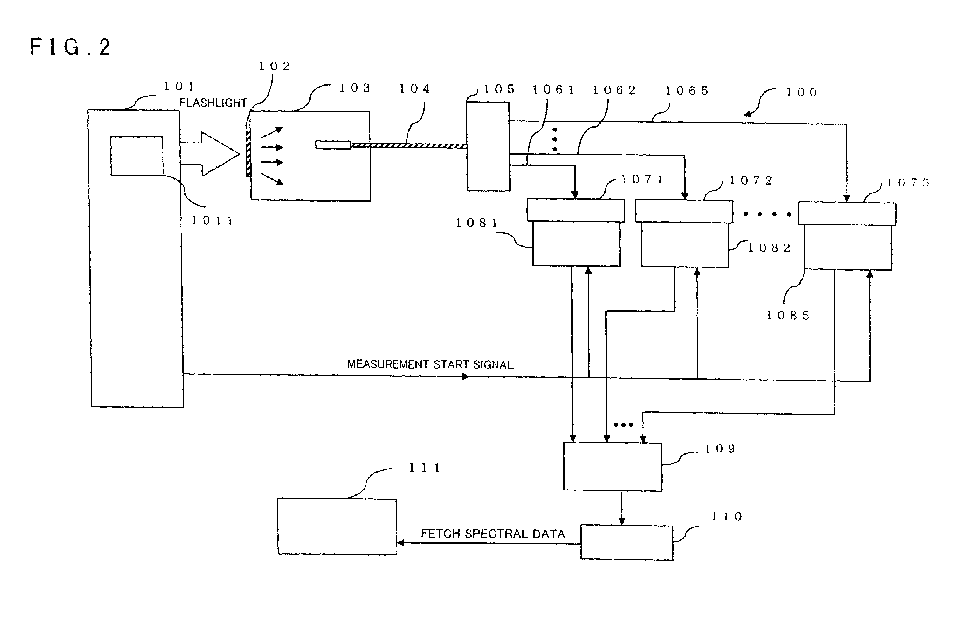

Fig. 2 is a diagram illustrating a configuration of a spectroradiometer 100 for measuring pulse light emission of a pulse-lighting type solar simulator 101 according to the prior art.
As illustrated in the drawing, in the spectroradiometer 100, pulse light emission from a discharge lamp 1011 of the pulse-lighting type solar simulator 101 is received by an optical fiber 104 via an incident optical system 103 including a transmission-type diffuser plate 102, then introduced into optical fibers 1061, 1062, ... 1065 suitable for characteristics of wavelengths λ1, λ2, ... λ5 in a splitting unit 105, and the lights are made incident on spectroscopes 1071, 1072, ... 1075 (in the case of five spectroscopes). Detectors 1081, 1082, ... 1085 included in the respective spectroscope 1071, 1072, ... 1075 are intended for measuring the spectral radiation characteristic of the pulse-lighting type solar simulator in synchronization with a trigger signal for pulse-lighting the discharge lamp 1011 of the pulse-lighting type solar simulator 101, according to the measurement start signal emitted in a short time of pulse light emission.

### CITATION LIST

### PATENT LITERATURE

Patent Literature 1: Japanese Laid-open Patent Publication No. 11-37851
Patent Literature 2: Japanese Laid-open Patent Publication No. 2001-194302
Patent Literature 3: Japanese Laid-open Patent Publication No. 2002-277207

### SUMMARY OF THE INVENTION

### TECHNICAL PROBLEM

However, in the spectroradiometer 100 as illustrated in Fig. 2, it is difficult for the detectors 1081, 1082 ... 1085 to accurately measure the spectral radiation characteristic of pulse light emission. This is not only because the pulse light emission time is short, but also because the timing of light emission sometimes varies in a range of about several tens to 100 µsec since the discharge lamp 1011 used in the pulse-lighting type solar simulator 101 releases electric charges charged in a not-illustrated capacitor by discharge between lamp electrodes to emit light. In other words, the timing from the time when the trigger signal for lighting the discharge lamp 1011 is emitted to the time when the discharge lamp 1011 actually emits light varies. Another problem is that accurate measurement of the spectral radiation characteristic cannot be performed for the discharge lamp 1011 having a short light emission time if the measurement timing is deviated.

More specifically, in the measurement of a light emission spectrum of the conventional pulse-lighting type solar simulator 101, in order to share a wide spectral region of 0.25 to 2.5 µm among several spectroscopes 1071, 1072, ... 1075 because the lighting time of the discharge lamp 1011 is short, the detectors 1081, 1082 ... 1085 in an array-form are attached to the spectroscopes 1071, 1072, ... 1075, and the detectors 1081, 1082 ... 1085 measure and record the spectra of the discharge lamp 1011 in synchronization with the trigger signal for lighting the discharge lamp 1011, according to the measurement start signal. However, the discharge lamp 1011 varies in time period required from the time when the trigger signal for starting light emission is received to the time when the discharge lamp 1011 actually emits light, and thus has a problem that timings of the actual light emission and measurement are deviated from each other and measurement needs to be repeatedly performed a number of times. On the other hand, since the lighting time of the discharge lamp 1011 is short, measurement of spectra by the detectors 1081, 1082 ... 1085 needs to be performed immediately after the trigger signal is received. Further, another problem is that since there are various pulse-lighting type solar simulators, there are various light emission patterns and the optimal timings for measurement are different among the respective simulators, so that it is impossible to guarantee that the measured spectral radiation characteristic is truly that at the peak light emission of the pulse when measuring the solar cell.

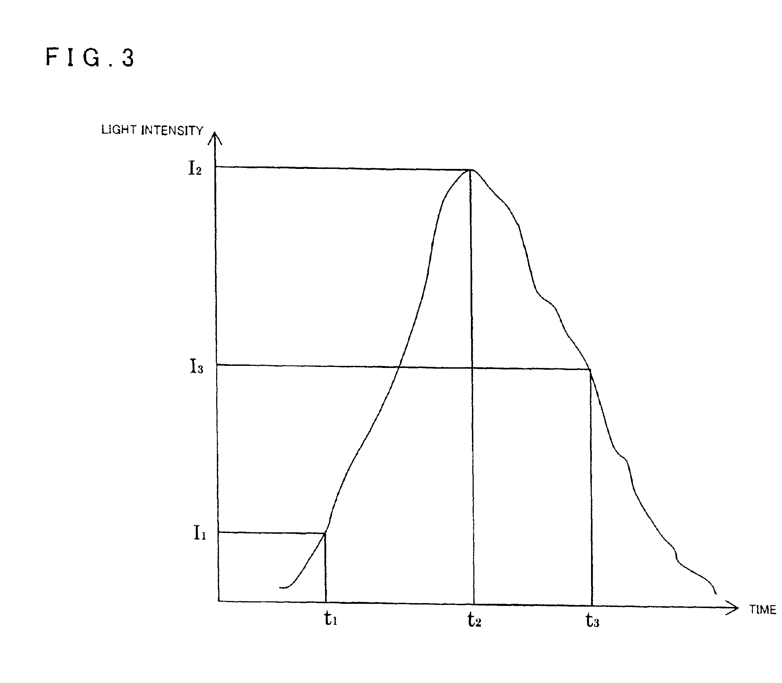

Fig. 3 is a diagram illustrating an example of a light emission pattern of a short-pulse type solar simulator. This light emission pattern is a light emission pattern when light received from a pulse-lighting type solar simulator is received by a photo-detector without dispersion, and this light emission pattern translates in a time axis direction but its waveform itself is almost fixed.
This drawing illustrates that an intensity I1 is at a time t1 at start of pulse lighting, an intensity I2 is at a peak time t2, and an intensity I3 is at a time t3 after the peak time t2 of the intensity, and the spectral radiation characteristic of light at the peak time t2 are to be measured by the spectroradiometer. However, the characteristic at the peak time t2 is generally different from the spectral radiation characteristics at non-peak times such as t1 and t3. In short, if the measurement timing is deviated from t2, a right spectral radiation characteristic when measuring the solar cell cannot be obtained.

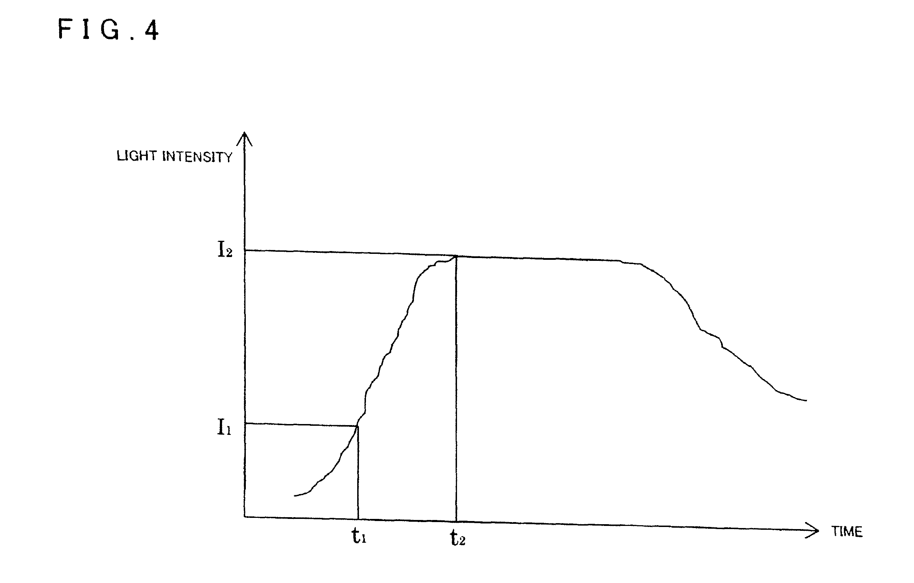

Further, Fig. 4 is a diagram illustrating an example of a light emission pattern of a long-pulse type solar simulator. Unlike the light emission pattern of the short-pulse type solar simulator, a long and flat peak part continues. The time period from the time when light is emitted to the time when the light reaches the peak part also varies depending on the kind of the pulse-lighting type solar simulator, bringing about a problem that it is difficult to perform measurement at the optimum timing.

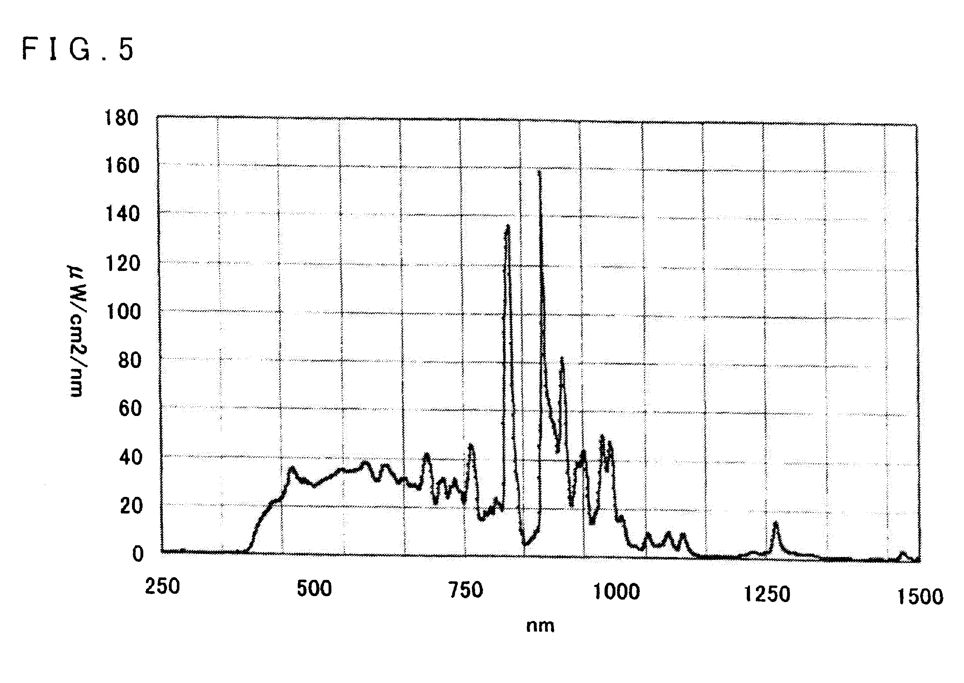

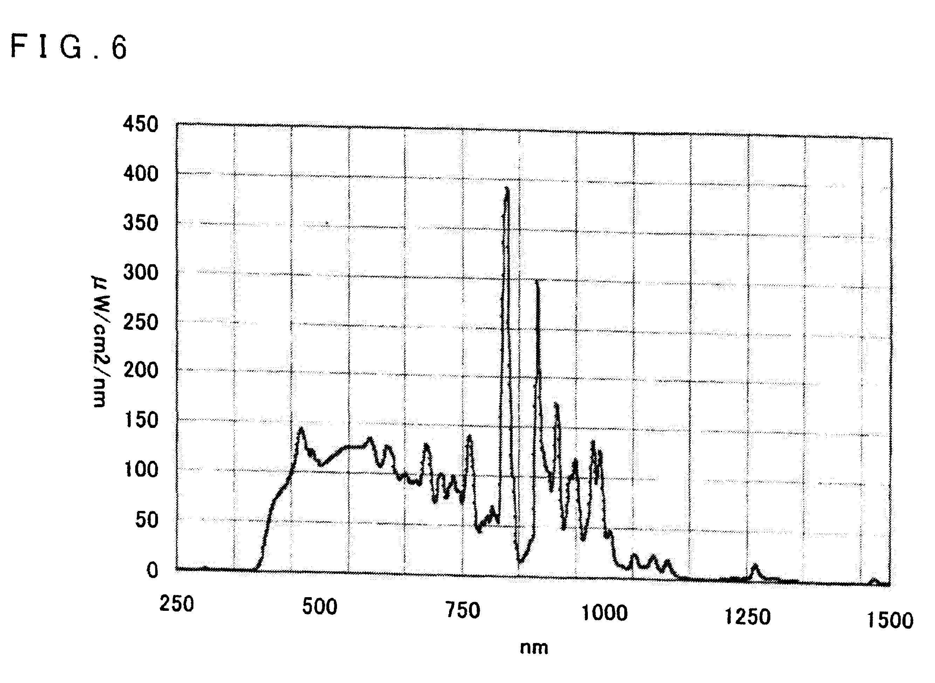

Fig. 5 is a graph illustrating a measurement result of a spectral radiation characteristic of a pulse-type solar simulator by a spectroradiometer according to the prior art.
As illustrated in the drawing, there occurs a measurement error because of measurement at an inappropriate measurement timing deviated from the peak time t2.
On the other hand, Fig. 6 is a graph illustrating a measurement result of a spectral radiation characteristic of the pulse-type solar simulator by the spectroradiometer measured at an appropriate measurement timing.

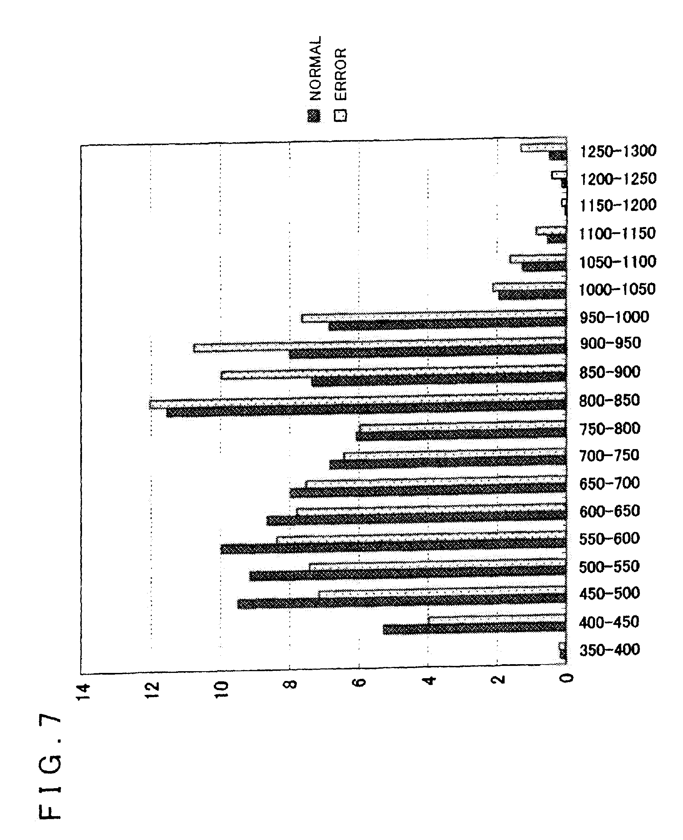

Fig. 7 is an illustration of spectral energy ratios of the two measurement results compared for each wavelength band of a width of 50 nm expressed by bar graphs so as to find the difference between the measurement results in Fig. 5 and Fig. 6. As is clear from this drawing, it is found that spectral distribution errors of underestimation within (400 nm to 650 nm) and overestimation within (850 nm to 950 nm) are caused by the inappropriate measurement timing in Fig. 5. This result further shows that the flashlight measured at the inappropriate measurement timing, as compared to the flashlight measured at the appropriate timing, well coincides with a state of the foot of the flashlight emitted at a low temperature because of insufficient conducted current strength, namely, a state of the flashlight whose spectral distribution is shifted to the longer wavelength side.

An object of the present invention is, in consideration of the above problems, to provide a standard spectroradiometer capable of accurately measuring a spectral radiation characteristic of a pulse-lighting type solar simulator and provide a standard spectroradiometer also having a function of diagnosing a light source lamp of a solar simulator and a lighting circuit thereof.

### SOLUTION TO PROBLEM

The present invention employs the following means to solve the above-described problems.
A first means is a standard spectroradiometer including first light detection means for respectively detecting spectral lights obtained by dispersion and a computer acquiring optical spectra detected by the first light detection means, the spectral lights being made by splitting a flashlight emitted from a pulse-lighting type solar simulator by a plurality of optical fibers and dispersing the split flashlights by respective spectroscopes, the standard spectroradiometer including: a second light detection means for detecting the flashlight emitted from the pulse-lighting type solar simulator; a threshold determination circuit comparing a detection voltage detected by the second light detection means and a threshold reference voltage and outputting a determination signal when the detection voltage becomes equal to or higher than the threshold reference voltage; and a delay time generation circuit receiving input of the determination signal and outputting a measurement start signal, wherein each of the first light detection means starts detection upon receiving input of the measurement start signal.
A second means is the standard spectroradiometer in the first means, further including: a storage means for detecting the flashlight emitted from the pulse-lighting type solar simulator in time series and storing a time-series light emission pattern, wherein the computer reads time-series pattern data stored in the storage means to read a peak value of the flashlight.
A third means is the standard spectroradiometer in the second means, wherein the storage means stores the measurement start signal outputted from the delay time generation circuit together with the time-series light emission pattern, and the computer displays a point in time of outputting the measurement start signal together with the time-series light emission pattern on a same screen.
A fourth means is the standard spectroradiometer in the second means, wherein the computer includes a means for reading the time-series light emission pattern stored in the storage means and setting a predetermined allowed time Δtd between before and after the peak time of the time-series light emission pattern; a means for determining whether or not the measurement start signal falls within the allowed time Δtd; and a means for employing measurement data detected by each of the first light detection means when the measurement start signal falls within the allowed time Δtd.
A fifth means is the standard spectroradiometer in the second means, wherein the computer includes: a means for detecting a time t1 when a threshold value is reached in the threshold determination circuit every time the pulse-lighting type solar simulator is lighted a plurality of times and detecting a time t2 of the peak value from the time-series light emission pattern stored in the storage means; a means for finding an average value of a time difference Δt = t2 - t1 every time the pulse-lighting type solar simulator is lighted a plurality of times; and a means for automatically setting the found average value as a delay time in the delay time generation circuit.
A sixth means is the standard spectroradiometer in the second means, wherein the computer includes: a means for detecting a time t1 when a threshold value is reached in the threshold determination circuit every time the pulse-lighting type solar simulator is lighted a plurality of times and detecting a time t2 of the peak value from the time-series light emission pattern stored in the storage means; and a means for determining abnormality or lifetime of a discharge lamp included in the pulse-lighting type solar simulator from a magnitude of variation in a time difference Δt = t2 - t1.

### ADVANTAGEOUS EFFECTS OF INVENTION

According to the present invention, it is possible to suppress the measurement error of spectra by detecting the intensity of a flashlight emitted from a pulse-lighting type solar simulator and adjusting the measurement timing of spectral lights obtained by dispersion by spectroscopes based on the detected intensity of the flashlight.
Further, according to the present invention, it is possible to determine the abnormality and the status of degradation of a discharge lamp by lighting the discharge lamp of the pulse-lighting type solar simulator a plurality of times in advance for each measurement of the spectral irradiance and inspecting for variation in time difference Δt and variation in pulse width from the light emission pattern.
Further, according to the present invention, previous adjustment and check work enables high-precision measurement of the spectral radiation characteristic of the pulse-lighting type solar simulator and diagnosis for the abnormality of the discharge lamp including the lighting circuit.
Further, according to the present invention, a notebook computer is used as the computer and the other parts are reduced in size to be portable, whereby, for example, even when there are a plurality of lines in a solar cell manufacturing plant, it is possible to easily measure spectral radiation characteristics of pulse-lighting type solar simulators set at all of the lines in the plant by one standard spectroradiometer and to maintain the accuracy of the solar cell measurement at the solar cell manufacturing lines.

### BRIEF DESCRIPTION OF DRAWINGS

Fig. 1 is a diagram illustrating a configuration of a standard spectroradiometer 1 according to the present invention;
Fig. 2 is a diagram illustrating a configuration of a spectroradiometer 100 according to the prior art;
Fig. 3 is a diagram illustrating an example of a light emission pattern of a short-pulse type solar simulator;
Fig. 4 is a diagram illustrating an example of a light emission pattern of a long-pulse type solar simulator;
Fig. 5 is a graph illustrating a measurement result of a spectral radiation characteristic of a pulse-type solar simulator by a spectroradiometer according to the prior art;
Fig. 6 is a graph illustrating a measurement result of a spectral radiation characteristic of the pulse-type solar simulator by the spectroradiometer measured at an appropriate measurement timing; and
Fig. 7 is a graph illustrating that a measurement error occurs by comparison between integral values of wavebands in comparing between the spectral radiation characteristic illustrated in Fig. 5 and the spectral radiation characteristic illustrated in Fig. 6.

### DESCRIPTION OF EMBODIMENTS

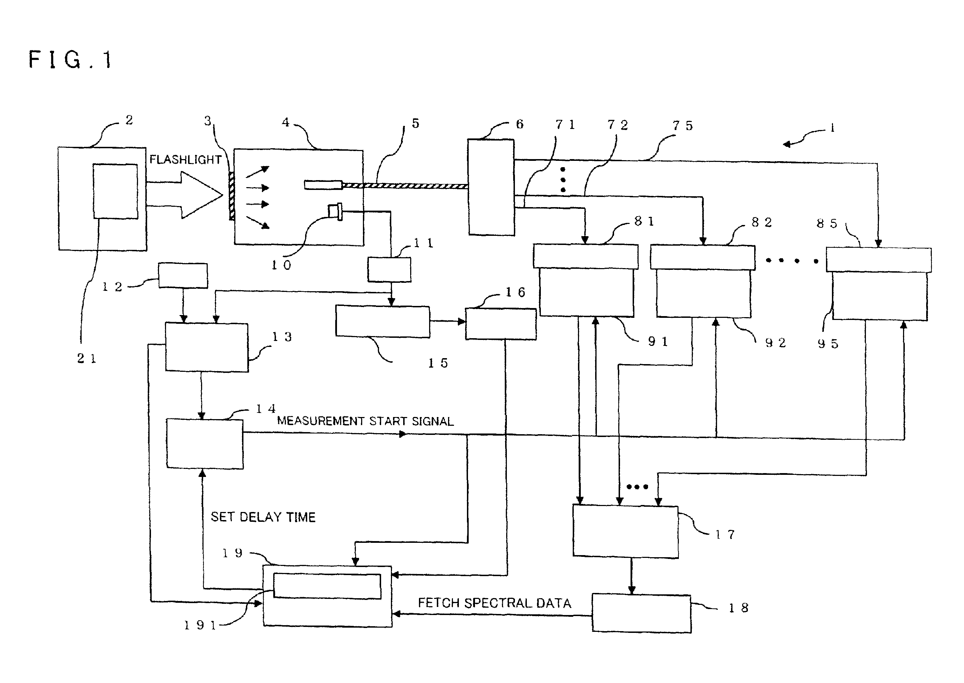

An embodiment of the present invention will be described using Fig. 1 and Fig. 3.
Fig. 1 is a diagram illustrating a configuration of a standard spectroradiometer 1 according to the invention of this embodiment.
As illustrated in the drawing, the standard spectroradiometer 1 diffuses a flashlight emitted from a discharge lamp 21 of a pulse-lighting type solar simulator 2 by a transmission-type diffuser plate 3 (an integrating sphere or a reflection-type diffuser plate may be used), then introduces the diffused light into a plurality of optical fibers 71, 72, ... 75 suitable for characteristics of wavelengths λ1, λ2, ... 15 via an incident optical system 4, an optical fiber 5 and a splitting unit 6, and causes the introduced lights to enter spectroscopes 81, 82, ... 85 (in the case of five spectroscopes). The lights entered the spectroscopes 81, 82, ... 85 become spectra respectively and are detected by (photo) detectors 91, 92, ... 95 being first light detection means.

Further, in the standard spectroradiometer 1, the light introduced into the incident optical system 4 is detected by a detector 10 being a second light detection means monitoring its intensity, an output detected by the detector 10 is amplified in an amplifier 11, and one of outputs from the amplifier 11 is inputted into a threshold determination circuit 13 and the other output is inputted into an A/D circuit 15. When a signal inputted into the threshold determination circuit 13, namely, the output detected by the detector 10 exceeds a threshold reference voltage set in advance by a threshold reference voltage unit 12, a trigger signal is emitted from the threshold determination circuit 13 and inputted into a delay time generation circuit 14.

Here, if, for example, the threshold reference voltage set in the threshold reference voltage unit 12 is set to a voltage corresponding to an intensity I1 of light illustrated in Fig. 3, the trigger signal is outputted from the threshold determination circuit 13 at a time t1, and if a delay time until t2 when the light intensity is at a peak I2, Δt = t2 - t1, is set in the delay time generation circuit 14, a measurement start signal is outputted from the delay time generation circuit 14 to the detectors 91, 92, ... 95 of the spectroscopes 81, 82, ... 85 Δt after the time t1 and, at that timing, spectral lights are detected in the detectors 91, 92, ... 95. The detected spectral lights are stored in a memory 18 as spectral radiation characteristic data via an A/D circuit 17. Note that since reaction times of the detectors 91, 92, ... 95 are much shorter as compared to a light emission pulse width of the discharge lamp 21, the measurement is completed at a peak part of light emission of the lamp, namely, the time t2.

On the other hand, an intensity signal I of the flashlight transmitted from the amplifier 11 via the A/D circuit 15 is sequentially stored in a memory 16. A computer 19 can read data in the memory 16 to thereby read a time-series light emission pattern as illustrated in Fig. 3, and find the timing t2 when the intensity signal I reaches the peak I2 through a display means 191 included in the computer 19.

Further, the computer 19 can read the stored contents from the memory 18 and acquire the measurement start signal outputted from the delay time generation circuit 14 to thereby find the point in time of the time-series light emission pattern when the measurement start signal is emitted.

Further, the computer 19 can read out in advance the time-series light emission pattern in the memory 16, set an allowed time Δtd that is several milliseconds between before and after the peak time of the time-series light emission pattern, further receive input of the measurement start signal outputted from the delay time generation circuit 14, determine whether or not the measurement start signal falls within the allowed time Δtd, and employ the measurement data detected by the detectors 91, 92, ... 95 and stored in the memory 18 when the measurement start signal falls within the allowed time Δtd.

Further, the computer 19 can detect in advance the time t1 when the threshold value I1 is measured in the threshold determination circuit 13 on one hand and detect the time t2 of the peak value I2 from the memory 16 on the other hand every time the discharge lamp 21 of the pulse-lighting type solar simulator 2 is lighted a plurality of times to statistically find the range of variation in the time difference Δt = t1 - t2 at every lighting and the setting reference of the allowed time Δtd.
Further, the computer 19 can also find an average value of the time difference Δt = t1 - t2 at every lighting and automatically set the average value as the delay time to the delay time generation circuit 14.

Further, the computer 19 can light in advance the discharge lamp 21 of the pulse-lighting type solar simulator 2 a plurality of times and determine that the discharge lamp 21 and the lighting circuit thereof are in an abnormal state or that the discharge lamp 21 reaches the end of its lifetime when the magnitude of the obtained variation in the time difference Δt = t1 - t2 at every lighting is equal to or higher than a predetermined value.

### INDUSTRIAL APPLICABILITY

The present invention is applicable for development of a solar cell with excellent performance or to performance evaluation of a pulse-type solar simulator set on a solar cell manufacturing line. In addition, the present invention can be used as a standard spectroradiometer for measuring a flashlight of a flash lamp for a camera, for medical use, for printing, for ultraviolet curing and the like. Further, it becomes possible to measure wavelength fluctuation of laser light having temperature fluctuation and time variation as the field of application. This further makes it possible to accurately measure the weather resistance and the radiation exposure amount of short-wavelength laser light of UV light and the like.

## Claims

1. A standard spectroradiometer comprising first light detection means for respectively detecting spectral lights obtained by dispersion and a computer acquiring optical spectra detected by said first light detection means, the spectral lights being made by splitting a flashlight emitted from a pulse-lighting type solar simulator by a plurality of optical fibers and dispersing the split flashlights by respective spectroscopes, said standard spectroradiometer comprising:
a second light detection means for detecting the flashlight emitted from said pulse-lighting type solar simulator; a threshold determination circuit comparing a detection voltage detected by said second light detection means and a threshold reference voltage and outputting a determination signal when the detection voltage becomes equal to or higher than the threshold reference voltage; and a delay time generation circuit receiving input of the determination signal and outputting a measurement start signal, wherein each of said first light detection means starts detection upon receiving input of the measurement start signal.

2. The standard spectroradiometer according to claim 1, further comprising:
a storage means for detecting the flashlight emitted from said pulse-lighting type solar simulator in time series and storing a time-series light emission pattern, wherein said computer reads time-series pattern data stored in said storage means to read a peak value of the flashlight.

3. The standard spectroradiometer according to claim 2,
wherein said storage means stores the measurement start signal outputted from said delay time generation circuit together with the time-series light emission pattern, and said computer displays a point in time of outputting the measurement start signal together with the time-series light emission pattern on a same screen.

4. The standard spectroradiometer according to claim 2,
wherein said computer comprises a means for reading the time-series light emission pattern stored in said storage means and setting a predetermined allowed time Δtd between before and after the peak time of the time-series light emission pattern; a means for determining whether or not the measurement start signal falls within the allowed time Δtd; and a means for employing measurement data detected by each of said first light detection means when the measurement start signal falls within the allowed time Δtd.

5. The standard spectroradiometer according to claim 2,
wherein said computer comprises: a means for detecting a time t1 when a threshold value is reached in said threshold determination circuit every time said pulse-lighting type solar simulator is lighted a plurality of times and detecting a time t2 of the peak value from the time-series light emission pattern stored in said storage means; a means for finding an average value of a time difference Δt = t2 - t1 every time said pulse-lighting type solar simulator is lighted a plurality of times; and a means for automatically setting the found average value as a delay time in said delay time generation circuit.

6. The standard spectroradiometer according to claim 2,
wherein said computer comprises: a means for detecting a time t1 when a threshold value is reached in said threshold determination circuit every time said pulse-lighting type solar simulator is lighted a plurality of times and detecting a time t2 of the peak value from the time-series light emission pattern stored in said storage means; and a means for determining abnormality or lifetime of a discharge lamp included in said pulse-lighting type solar simulator from a magnitude of variation in a time difference Δt = t2 - t1.
